# EUROPÄISCHE PATENTSCHRIFT

(11) **EP 2 427 512 B1**
(45) Veröffentlichungstag und Bekanntmachung des Hinweises auf die Patenterteilung: **11.06.2014**
(21) Anmeldenummer: 10717066.4
(22) Anmeldetag: 30.04.2010
(51) Int. Cl.: C08G 63/20, C08G 63/668, C11D 3/37, C11D 3/00

(54) **KAMMPOLYMERE UND DEREN VERWENDUNG IN WASCH- UND REINIGUNGSMITTELN**
COMB POLYMERS AND THEIR USE IN WASHING AND CLEANING PRODUCTS
POLYMÈRES EN PEIGNE ET LEUR UTILISATION DANS DES LESSIVES ET DES PRODUITS DE LAVAGE

(30) Priorität: 07.05.2009 DE 102009020299
(43) Veröffentlichungstag der Anmeldung: 14.03.2012
(73) Patentinhaber: Clariant Finance (BVI) Limited, Road Town, Tortola (VG)
(72) Erfinder: MORSCHHAEUSER, Roman, 55122 Mainz (DE); BORCHERS, Georg, 61231 Bad Nauheim (DE); SCHOLZ, Hans, Juergen, 63755 Alzenau (DE)
(74) Vertreter: Paczkowski, Marcus
(86) Internationale Anmeldenummer: PCT/EP2010/002647
(87) Internationale Veröffentlichungsnummer: WO 2010/127809

(56) Entgegenhaltungen:
- DE-A1- 19 943 436
- US-A1- 2004 048 749
- US-B1- 6 255 274

## Beschreibung

Die Erfindung betrifft wasserlösliche und/oder Wasser dispergierbare Kammpolymere, bestehend aus einer Polymerhauptkette, die über Estergruppen verknüpfte Polyesterseitenarme trägt, wobei die Polyesterseitenarme mit nichtionischen Gruppen endverschlossen sind. Diese Kammpolyester werden als Soil Release Polyester in Wasch- und Reinigungsmitteln eingesetzt.

In US 4,427,557 werden Polyester mit Molekulargewichten im Bereich von 2.000 und 10.000 g/mol, hergestellt aus den Monomeren Ethylenglykol (1), Polyethylenglykol (2) mit Molekulargewichten von 200 bis 1.000 g/mol, aromatischen Dicarbonsäuren (3) und Alkalisalzen von sulfonierten aromatischen Dicarbonsäuren (4), beschrieben und deren soil release Wirkung auf Polyester-Gewebe ausgelobt.

US 4,702,857 beansprucht Polyester aus Ethylenglykol, 1,2-Propylenglykol oder Mischungen daraus (1), Polyethylenglykol mit mindestens 10 Glykoleinheiten, das an einem Ende mit einer kurzkettigen Alkylgruppe, insbesondere mit einer Methylgruppe verschlossen ist (2), einer Dicarbonsäure bzw. -ester (3) und optional Alkalisalzen von sulfonierten aromatischen Dicarbonsäuren (4).

US 4,721,580 offenbart Polyester mit Terephthalat-Einheiten und sulfonhaltigen Endgruppen, insbesondere sulfoethoxylierte Endgruppen MO₃S(CH₂CH₂O)ₙ-H und lobt deren Verwendung in Waschmittel und Weichspülmittel aus.

US 4,968,451 beschreibt Polyester mit sulfonhaltigen Endgruppen, erhalten durch Copolymerisation von (Meth)allylalkohol, Alkylenoxid, Aryldicarbonsäure und C₂-C₄-Glykol und anschließender Sulfonierung.

In US 5,415,807 wird dargelegt, dass Soil Release Polymere mit sulfonierten Polyethoxy/Propoxy Endgruppen zur Kristallisation neigen, woraus eine Reduzierung der Soil Release Effekte resultiert. Die Schrift lehrt, dass die Kristallisationsneigung der SRP durch Zusatz von Hydrotropen unterdrückt werden kann.

In US 5,691,298 werden Soil Release Polymere mit verzweigtem Rückgrat aus Di- oder Polyhydroxysulfonat, Terephthalat- und 1,2-Oxyalkylenoxy-Einheiten mit nichtionischen oder anionischen Endgruppen beansprucht.
In WO 01/23515 werden anionische Polyester und deren Verwendung zum Reinigen harter Oberflächen ausgelobt, gekennzeichnet dadurch, dass die Polyester sulfogruppenhaltige Endgruppen enthalten. Diese Polyester-Typen sind klebrig und für feste Applikationen problematisch.
In EP 1 035 194 werden kammförmige Polyester beschrieben, die Endcap-Gruppen aus Monoalkyl- oder Dialkylamine, Alkoholen, Carbonsäuren oder sulfongruppenhaltigen Gruppen haben, sowie deren Verwendung in Wasch- und Reinigungsmittel.

Bisher bekannte Soil Release Polymere sind in ihren anwendungsrelevanten Eigenschaften, insbesondere hinsichtlich soil release Wirkung, Wasserlöslichkeit, aber auch Hygroskopizität und Konsistenz für die Anwendung in Wasch- und Reinigungsmittel nicht in vollem Umfang befriedigend. Mit steigendem Sulfonierungsgrad kommt es zudem während der Synthese der betreffenden Polyester zu stark ansteigenden Schmelzviskositäten und damit zu erheblichen verfahrenstechnischen Problemen. Bei Schmelzviskositäten über 50.000 mPas bei 200 °C wird das Rühren im Reaktor zunehmend erschwert und der vollständige Austrag der Polymerschmelze aus dem Reaktor kaum noch möglich.

Die Aufgabe der vorliegenden Erfindung bestand darin, Polyester für die Verwendung in Wasch- und Reinigungsmitteln bereit zu stellen, die gut wasserlöslich sind, sehr gute soil release Wirkung zeigen, kompatibel mit in Wasch- und Reinigungsmitteln gängigen Zusatz- und Hilfsstoffen sind, leicht in Formulierungen eingearbeitet werden können und hydrolysestabil sind. Sie sollten bei Temperaturen unterhalb von 60 °C gut und spontan wasserlöslich sein und ihre Wirkung in Wasch- und Reinigungsmitteln voll entfalten, sowie auch bei reduziertem Spülwasserverbrauch ein verbessertes Reinigungs- und Klarspülprofil aufweisen.
Zudem sollen diese Polyester Schmelzviskositäten von maximal 50.000 mPas bei 200 °C bei aufweisen.

Es wurde überraschend gefunden, dass diese Aufgabe gelöst wird durch bestimmte Kammpolyester, wie nachstehend definiert.

Gegenstand der Erfindung sind Kammpolymere, bestehend aus einer Polymerhauptkette und mit dieser Polymerhauptkette über Estergruppen verknüpften Polyesterseitenketten, dadurch gekennzeichnet,
(i) dass die Polymerhauptkette eine Polycarbonsäure oder eine Copolymer-Polycarbonsäure (A) ist,
(ii) dass die Polyesterseitenketten die Bestandteile (B1) C₈-Dicarbonsäuren, die gegebenenfalls sulfoniert sind, (B2) Diole und/oder Polyolether mit 2 OH-Gruppen, sowie (C) nichtionische Endgruppen der Formel -O-(AO)ₓR, wobei A Ethylen, Propylen oder Butylen, x eine Zahl von 1 bis 100, und R ein Kohlenwasserstoffrest mit 1 bis 30 C-Atomen bedeuten, enthalten;
(iii) dass der Gesamtmassenprozentanteil der Polyesterseitenketten B1+B2+C 80 bis 99,9 %, vorzugsweise 90 bis 99,8 %, besonders bevorzugt 93 bis 99,5 %, bezogen auf die Gesamtmasse des Kammpolymers, ist;
(iv) dass die Polyesterseitenketten durch eine Veresterungsreaktion der Komponenten B1, B2 und C im Massenverhältnis B1+B2 / C von 2:1 bis 100:1, bevorzugt 3:1 bis 40:1, besonders bevorzugt 4:1 bis 15:1, erhalten werden.

Die erfindungsgemäßen Kammpolymere zeichnen sich durch eine gute soil release Wirkung und Dispergiervermögen aus. Sie sind bei Temperaturen unterhalb von 60 °C gut und spontan wasserlöslich. Für den Herstellprozess besonders vorteilhaft ist, dass sie Schmelzviskositäten bei 200 °C im Bereich von 1.000 bis 50.000 mPas, bevorzugt 5.000 bis 45.000 mPas, besonders bevorzugt 15.000 bis 35.000 mPas aufweisen.

Die Schmelzviskositäten wurden mit einem Haake Rotationsviskosimeter RV2 bei 200 °C sowie bei 230 °C ermittelt.
Die zahlenmittleren Molekulargewichte Mn bevorzugter erfindungsgemäßer Kammpolymere liegen im Bereich von 800 bis 25.000 g/mol, insbesondere 1.000 bis 16.000 g/ mol, besonders bevorzugt 1.200 bis 12.000 g/mol.

Bevorzugte erfindungsgemäße Kammpolyester sind weiterhin dadurch gekennzeichnet, dass sie einen Fließfaktor ffc von mehr als 8, vorzugsweise von 10 bis 30 aufweisen.
Bevorzugte erfindungsgemäße Kammpolyester sind weiterhin dadurch gekennzeichnet, dass sie einen Schmelzpunkt (definiert als das Peakmaximum aus Differential Scanning Calorimetry) von über 40 °C, vorzugsweise über 50 °C, insbesondere über 55 °C aufweisen.
Besonders bevorzugte erfindungsgemäße Kammpolyester sind dadurch gekennzeichnet, dass sie zusätzlich zu dem Fließfaktor und dem Schmelzpunkt, wie zuvor definiert, ein zahlenmittleres Molekulargewicht Mn von 1.500 bis 16.000 g/mol aufweisen.

Die Polycarbonsäuren (A) leiten sich ab von polymeren aliphatischen, cycloaliphatischen oder aromatischen Polycarbonsäuren bzw. deren Derivaten, wie beispielsweise Polyacrylsäure, Polymethacrylsäure, und deren Anhydride oder deren Ester (Ester der Säuren mit aliphatischen, cycloaliphatischen oder aromatischen Alkoholen mit linearen oder verzeigten, gesättigten oder ungesättigten Kohlenstoffketten mit 1 bzw. 2 bis 22 Kohlenstoffatomen), Maleinsäure, Maleinsäureanhydrid, Fumarsäure, Itaconsäure und Norbornensäure. Besonders bevorzugt sind Polyacrylsäure und Polymethacrylsäure und deren Derivate wie vorstehend erwähnt, sowie Polyacrylsäure-Maleinsäureanhydrid-Copolymere.
Die zahlenmittleren Molekulargewichte der eingesetzten Polycarbonsäuren oder Copolymer-Polycarbonsäuren können zwischen 200 und 2.000.000 g/mol, bevorzugt zwischen 1.000 und 100.000 g/mol, besonders bevorzugt zwischen 1.000 und 50.000 g/mol liegen.

Weiterhin kann der Polymerhauptkamm auch Struktureinheiten enthalten, die sich ableiten von weiteren vinylischen Monomeren wie beispielsweise Styrol, Acrylamid, α-Methylstyrol, N-Vinylpyrrolidon, N-Vinylpyridin, N-Vinylformamid, N-Vinylcaprolactam, Vinylacetat, Acrylamidopropylensulfonsäure (AMPS), Vinylsulfonsäure, Vinylphosphonsäure und deren Alkali-, Erdalkali und Ammoniumsalze, wobei die Anordnung der Struktureinheiten statistisch, alternierend oder blockartig sein kann.

Eine bevorzugte Ausführungsform der Erfindung sind Kammpolymere, in deren Seitenketten sich die Komponente (B1) ableitet von:
Terephthalsäure, Isophthalsäure und deren Anhydride oder deren Ester, 1,3-Cyclohexandicarbonsäure, 1,4-Cyclohexandicarbonsäure;
Sulfoisophthalsäuren, beispielsweise 5-Sulfoisophthalsäure, deren Anhydrid, Ester oder deren Alkali- oder Erdalkalisalz, insbesondere Lithium- und Natriumsalze oder Mono-, Di-, Tri- oder Tetraalkylammoniumsalze mit C₁- bis C₂₂-Alkylresten.

Eine besonders bevorzugte Ausführungsform sind Kammpolyester, deren Seitenketten (B1) Strukturelemente enthalten, die sich ableiten von Terephthalsäure oder Dialkylterephthalat, insbesondere Dimethyltherephthalat. Eine weitere besonders bevorzugte Ausführungsform sind Kammpolyester, deren Seitenketten (B1) Strukturelemente enthalten, die sich ableiten von 5-Sulfoisophthal-säure bzw. deren Alkali- oder Erdalkali-Salzen.

Eine bevorzugte Ausführungsform der Erfindung sind Kammpolymere, in deren Seitenketten sich die Komponente (B2) ableitet von:
Ethylenglykol, ein Propandiol, beispielsweise 1,2-Propylenglykol, ein Butandiol, beispielsweise 1,2-Butylenglykol, ein Polyethylenglykol, beispielsweise Diethylenglykol, Triethylenglykol, Tetraethylenglykol, ein Polypropylenglykol oder eine Kombination davon.
Polyethylenglykole (PEG) und Polypropylenglykole können Molmassen von 200 bis 8.000, vorzugsweise 500 bis 8.000 g/mol, aufweisen, insbesondere PEG 200, PEG 300, PEG 400, PEG 500, PEG 600, PEG 750, PEG 800,
PEG 1000, PEG 1500, PEG 1850, PEG 2000, PEG 3000, PEG 3350, PEG 4000, PEG 6000, PEG 8000.
Es können auch Polymerisationsprodukte aus Propylenglykol, Ethylenglykol und/oder Butylenglykol in Blöcken, gradientenartig oder auch in statistischer Verteilung mit Molmassen von 90 bis 20.000 g/mol, vorzugsweise von 200 bis 6.000 g/mol, eingesetzt werden.

Eine bevorzugte Ausführungsform der Erfindung sind Kammpolymere, in deren Seitenketten sich die Komponente (C) ableitet von einer Polyalkoxyverbindung der Formel HO-(AO)ₓR, wobei A Ethylen, Propylen oder Butylen, x eine Zahl von 2 bis 100, bevorzugt 2 bis 40, insbesondere 2 bis 25, und R C₁-C₂₀-Alkyl, insbesondere Methyl, Ethyl, Propyl, Butyl, oder C₆-C₃₀-Aryl-alkenyl, wie Tristyrylphenyl, bedeuten, beispielsweise Triethylenglykolmonomethylether, Triethylenglykolmonobutylether, Tetraethylenglykolmonomethylether, Pentaethylenglykolmonomethylether,oder Tristyrylphenol-polyethoxylat mit 10 bis 30 EO-Einheiten.

Die Herstellung der Kammpolyester erfolgt nach an sich bekannten Verfahren, indem man die Komponenten (A), (B1), (B2) und (C) in Gegenwart eines Veresterungskatalysators in den vorstehend angegebenen Mengenverhältnissen miteinander umsetzt, zweckmäßig bei erhöhten Temperaturen.
Als Veresterungskatalysator kommen in Frage: Alkalimetallhydroxide, Alkalimetallcarbonate und Alkalimetallacetate, Erdalkalimetalloxide, -hydroxide, -carbonate und -acetate sowie Alkalimetall- und Erdalkalimetallsalze von Fettsäuren mit 6 bis 22 Kohlenstoffatomen. Weiterhin kommen Titanverbindungen, wie Titanate, metallisches Zinn und organische Zinnverbindungen, wie Mono- und Dialkylzinnderivate als Veresterungskatalysatoren in Betracht. Vorzugsweise wird die Veresterung/Umesterung unter Verwendung von Zinnschliff oder Titantetraisopropylat als Katalysator durchgeführt.
Die Veresterung oder Umesterung wird bevorzugt bei Temperaturen von 120 bis 280 °C durchgeführt, wobei das entstehende leichter siedende Kondensat (Alkohole oder Wasser) destillativ aus dem Kondensationsprodukt entfernt wird, bevorzugt unter vermindertem Druck bis zu < 0,1 mbar.

Aus Gründen der Reaktionsführung herrscht im Zielpolymer keine absolute Einförmigkeit der Substitution vor, vielmehr ist von einer gewissen statistischen Verteilungsbreite der Substitution auszugehen. Ferner werden bestimmte reaktive Molekülgruppierungen auch zu Vernetzung zweier oder mehrerer Polymerketten zu einem mehr oder weniger komplexen Netzwerk zu beobachten sein.

Die erfindungsgemäßen Kammpolymere sind farblos bis gelblich und geruchsneutral. Sie sind bei pH 3 bis 8 längere Zeit hydrolysestabil, gut konfektionierbar, in Wasser gut löslich und mit gängigen Wasch- und Reinigungsmittel gut kompatibel.
Sie verleihen den Textilfasern signifikant verbesserte schmutzablösende Eigenschaften und unterstützen das Schmutzablösevermögen der übrigen Waschmittelbestandteile gegenüber öligen, fettigen oder Farbanschmutzungen wesentlich.

Gegenstand der Erfindung ist daher auch die Verwendung der erfindungsgemäßen Kammpolymere als Schmutzlösepolymere in Wasch- und Reinigungsmitteln.
Weiter von Vorteil kann die Verwendung der erfindungsgemäßen Kammpolymere in Nachbehandlungsmitteln für die Wäsche, beispielsweise in einem Weichspülmittel sein.
Mit Hilfe von Kammpolyestern in Reinigungsmitteln für harte Oberflächen lassen sich die behandelten Oberflächen schmutzabstoßend ausrüsten.

Gegenstand der Erfindung sind daher auch Wasch- und Reinigungsmittel, enthaltend die erfindungsgemäßen Kammpolymere.
Die Wasch- und Reinigungsmittelformulierungen, in denen die Kammpolymere eingesetzt werden, können pulver-, granulat-, pasten-, gelförmig oder flüssig sein. Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, Bügelhilfen.
Die erfindungsgemäßen Kammpolyester können auch in Haushaltsreinigungsmitteln, beispielsweise Allzweckreiniger, Geschirrspülmittel, Teppichreinigungs- und Imprägniermittel, Reinigungs- und Pflegemittel für Böden und andere harte Oberflächen, z. B. aus Kunststoff, Keramik, Glas, eingesetzt werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die erfindungsgemäßen Wasch-, Pflege- und Reinigungsmittelformulierungen enthalten mindestens 0,1 Gew.-%, bevorzugt zwischen 0,1 und 10 Gew.-% und besonders bevorzugt 0,2 bis 3 % Gew.-% der erfindungsgemäßen Kammpolymere, bezogen auf die fertigen Mittel.

Die Formulierungen sind je nach ihrer vorgesehenen Anwendung in ihrer Zusammensetzung der Art der zu behandelnden oder zu waschenden Textilien oder der zu reinigenden Oberflächen anzupassen.
Die erfindungsgemäßen Wasch- und Reinigungsmittel können gängige Inhaltsstoffe, wie Tenside, Emulgatoren, Gerüststoffe, Bleichkatalysatoren und -Aktivatoren, Sequestriermittel, Vergrauungsinhibitoren, Farbübertragungsinhibitoren, Farbfixiermittel, Enzyme, optische Aufheller und weich machende Komponenten enthalten. Außerdem können Formulierungen oder Teile der Formulierung im Sinne der Erfindung durch Farbstoffe und/oder Duftstoffe gezielt eingefärbt und/oder parfümiert werden.

Die Gesamtkonzentration von Tensiden in der fertigen Wasch- und Reinigungsmittelformulierung kann von 1 bis 99 Gew.-%, bevorzugt von 5 bis 80 Gew.-% betragen. Die verwendeten Tenside können anionisch, nichtionisch, amphoter und kationisch sein. Es können auch Mischungen der genannten Tenside verwendet werden. Bevorzugte Wasch- und Reinigungsmittelformulierungen enthalten anionische und/oder nichtionische Tenside und deren Mischungen mit weiteren Tensiden.

Als anionische Tenside kommen Sulfate, Sulfonate, Carboxylate, Phosphate und Mischungen daraus in Betracht. Geeignete Kationen sind hierbei Alkalimetalle, wie z. B. Natrium oder Kalium oder Erdalkalimetalle, wie z. B. Calcium oder Magnesium sowie Ammonium, substituierte Ammoniumverbindungen, einschließlich Mono-, Di- oder Triethanolammoniumkationen, und Mischungen daraus. Folgende Typen von anionischen Tensiden sind von besonderem Interesse und ausführlich in der EP 1 035 194 A2 beschrieben: Alkylestersulfonate, Alkylsulfate, Alkylethersulfate, Alkylbenzolsulfonate, Alkenylbenzolsulfonate, Alkansulfonate und Seifen.

Als nicht-ionische Tenside kommen beispielsweise folgende Verbindungen in Frage, die ausführlich in der EP 1 035 194 A2 beschrieben sind: Polyethylen-, Polypropylen- und Polybutylenoxidkondensate von Alkylphenolen;
Kondensationsprodukte von aliphatischen Alkoholen mit ca. 1 bis ca. 25 mol Ethylenoxid;
Kondensationsprodukte von Ethylenoxid mit einer hydrophoben Basis, gebildet durch Kondensation von Propylenoxid mit Propylenglykol;
Kondensationsprodukte von Ethylenoxid mit einem Reaktionsprodukt von Propylenoxid und Ethylendiamin;
Semipolare nichtionische Tenside;
Fettsäureamide;
Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, alkoxylierte Triglycamide, Mischether oder Mischformyle, Alkyloligoglycoside, Alkenyloligoglycoside, Fettsäure-N-alkylglucamide, Phosphinoxide, Dialkylsulfoxide und Proteinhydrolysate;
Amphotere bzw. zwitterionische Tenside;

Geeignete kationische Tenside sind substituierte oder unsubstituierte geradkettige oder verzweigte quartäre Ammoniumsalze, wie ausführlich in der EP 1 035 194 A2 beschrieben.

Als Emulgatoren kommen in Betracht: Anlagerungsprodukte von 0 bis 30 Mol Alkylenoxid, insbesondere Ethylen-, Propylen- und/oder Butylenoxid an lineare oder verzweigte, gesättigte oder ungesättigte Fettalkohole mit 8 bis 22 C-Atomen, an Fettsäuren mit 12 bis 22 C-Atomen, an Alkylphenole mit 8 bis 15 C-Atomen in der Alkylgruppe und an Sorbitanester;
(C₁₂-C₁₈)-Fettsäuremono- und -diester von Anlagerungsprodukten von 0 bis 30 Mol Ethylenoxid an Glycerin;
Glycerinmono- und -diester und Sorbitanmono- und -diester von gesättigten und ungesättigten Fettsäuren mit 6 bis 22 Kohlenstoffatomen und gegebenenfalls deren Ethylenoxidanlagerungsprodukte;
Anlagerungsprodukte von 5 bis 60 Mol, vorzugsweise 15 bis 60 Mol, Ethylenoxid an Rizinusöl und/oder gehärtetes Rizinusöl;
Polyol- und insbesondere Polyglycerinester, wie z. B. Polyglycerinpolyricinoleat und Polyglycerinpoly-12-hydroxystearat.
Weitere Wasch- und Reinigungsmittelinhaltsstoffe, die in der vorliegenden Erfindung enthalten sein können, umfassen anorganische und/oder organische Gerüststoffe, um den Härtegrad des Wassers zu mindern, und sind ausführlich in der EP 1 035 194 A2 beschrieben.
Die Wasch- und Reinigungsmittelzusammensetzungen der vorliegenden Erfindung können gegebenenfalls einen oder mehrere konventionelle Bleichmittel enthalten, sowie Aktivatoren oder Stabilisatoren, insbesondere Peroxysäuren, die nicht mit den erfindungsgemäßen Polyestern reagieren. Sie sind ausführlich in der EP 1 035 194 A2 beschrieben.
Die erfindungsgemäßen Wasch- und Reinigungsmittelzusammensetzungen können ein oder mehrere konventionelle Enzyme enthalten. Solche Enzyme sind z. B. Lipasen, Amylasen, Proteasen, Cellulasen. Pullinasen, Cutinasen, Peroxidasen. An Proteasen stehen zur Verfügung BLAP^{®}, Opticlean^{®}, Maxacal^{®}, Maxapem^{®}, Esperase^{®}, Savinase^{®}, Purafect^{®}, OxP und/oder Duraxym^{®}, an Amylasen Termamyl^{®}, Amylase-LT^{®}, Maxamyl^{®}, Duramyl^{®} und/oder Pruafect^{®} OxAm, an Lipasen, Lipolase^{®}, Lipomax^{®}, Lumafast^{®} und/oder Lipozym^{®}. Sie sind ausführlich in der EP 1 035 194 A2 beschrieben.
Als Vergrauungsinhibitoren kommen in Betracht Carboxymethylcellulose, Methylcellulose, Hydroxyalkylcellulose, Methylhydroxyethylcellulose, Methylhydroxypropylcellulose, Methylcarboxymethylcellulose und Polyvinylpyrrolidon.
Auch Farbübertragungsinhibitoren kommen in Betracht, beispielsweise Polyamin-N-oxide wie etwa Poly-(4-vinylpyridin-N-oxid), z. B. Chromabond S-400, Fa. ISP; Polyvinylpyrrolidon, z. B. Sokalan^{®} HP 50/ Fa. BASF und Copolymere von N-Vinylpyrrolidon mit N-Vinylimidazol und gegebenenfalls anderen Monomeren.

Die Erfindung schließt auch Wasch- und Reinigungsmittel, enthaltend Farbfixiermittel als Wirksubstanzen ein, beispielsweise Farbfixiermittel, die erhalten werden durch Umsetzung von Diethylentriamin, Dicyandiamid und Amidoschwefelsäure, Aminen mit Epichlorhydrin, beispielsweise Dimethylaminopropylamin und Epichlorhydrin oder Dimethylamin und Epichlorhydrin oder Dicyandiamid, Formaldehyd und Ammoniumchlorid, oder Dicyandiamid, Ethylendiamin und Formaldehyd oder Cyanamid mit Aminen und Formaldehyd oder Polyaminen mit Cyanamiden und Amidoschwefelsäure oder Cyanamiden mit Aldehyden und Ammoniumsalzen, aber auch Polyamin-N-oxide wie etwa Poly-(4-vinylpyridin-N-oxid), z. B. Chromabond^{®} S-400, Fa. ISP; Polyvinylpyrrolidon, z. B. Sokalan^{®} HP 50/ Fa. BASF und Copolymere von N-Vinylpyrrolidon mit N-Vinylimidazol und gegebenenfalls anderen Monomeren.

Die erfindungsgemäßen Wasch- und Reinigungsmittel können Komplexbildner, beispielsweise Aminocarboxylate, wie Ethylendiamintetraacetat, N-Hydroxyethylethylendiamintriacetat, Nitrilotriacetat, Ethylendiamintetrapropionat, Triethylentetraaminhexaacetat, Diethylentriaminpentaacetat, Cyclohexandiamintetraacetat, Phosphonate, beispielsweise Azacycloheptandiphosphonat, Na-Salz, Pyrophosphate, Etidronsäure (1-Hydroxyethyliden-1,1-diphosphonsäure, 1-Hydroxyethyan-1,1-diphosphonsäure, Acetophosphonsäure) und ihre Salze, Aminophosphonate, wie Ethylendiamintetrakis (methylenphosphonat), Diethylentriaminpentakis(methylenphosphonat), Amintrimethylenphosphonsäure, Cyclodextrine, sowie polyfunktionell substituierte aromatische Komplexbildner, wie Dihydroxydisulfobenzol oder Ethylendiamindisuccinate enthalten.

Als optische Aufheller können eingesetzt werden cyclische Kohlenwasserstoffe wie Distyrylbenzole, Distyrylbiphenyle, Diphenylstilbene, Triazinylaminostilbene, Stilbenyl-2H-triazole, beispielsweise Stilbenzyl-2H-naphthol-[1,2-d]triazole und Bis(1,2,3-triazol-2-yl)stilbene, Benzoxazole, beispielsweise Stilbenylbenzoxazol und Bis(benzoxazol), Furane, Benzofurane und Benzimidazole, beispielsweise Bis(benzo[b]furan-2-yl)biphenly und cationische Benzimidazole, 1,3-Diphenyl-2-pyrazolin, Cumarin, Naphthalimide, 1,3,5-2-yl-Derivate, Methincyanin und Dibenzothiophen-5,5-oxid.
Bevorzugte sind anionische optische Aufheller, insbesondere sulfonierte Verbindungen.
Die erfindungsgemäßen Waschmittel können optische Aufheller in Mengen von 0,001 bis 2 Gew.-%, bevorzugt 0,002 bis 0,8 Gew.-%, besonders bevorzugt 0,003 bis 0,4 Gew.-%, enthalten.

Als weich machende Komponenten können quartäre Ammoniumsalze, die ausführlich in der EP 1 035 194 A2 beschrieben sind, eingesetzt werden.
Die erfindungsgemäßen Wasch- und Reinigungsmittel können auch Farbstoffe und Duft- bzw. Parfümstoffe enthalten.

Ein weiterer Gegenstand der Erfindung sind feste Geschirrreinigungsmittel, die die erfindungsgemäßen Kammpolyester enthalten. Hierbei handelt es sich um Mittel zum Reinigen von Glas, Porzellan, Besteck, Metall- und Kunststoffartikeln in der Maschine. Die Kammpolyester bewirken ein sehr gutes Ablaufverhalten des Spül- bzw. Klarspülwassers an den Oberflächen der genannten Artikel. Dadurch verkürzt sich die Trocknungszeit in der Spülmaschine und man erreicht ein rückstandloses und fleckenfreies Spülgut. Außerdem sind diese Polyester sehr gut wasserlöslich und erlauben damit eine Reduzierung der Menge an Spülwasser. Der Gehalt an erfindungsgemäß eingesetzten Kammpolyestem in festen Geschirrspülmittelformulierungen für die Maschine kann in breiten Grenzen schwanken und beträgt im Allgemeinen 0,1 bis 10 Gew.-%, vorzugsweise 0,5 bis 5 Gew.-%, besonders bevorzugt 1 bis 3 Gew.-%, bezogen auf die jeweilige Formulierung.

Die erfindungsgemäßen festen Geschirrreinigungsmittel für die Maschine können als Pulver, Granulate oder in Form von Tabletten dargeboten werden.
Die Herstellung der erfindungsgemäßen festen Geschirrreinigungsmittel kann auf bekannte Weise erfolgen, z. B. durch einfaches Vermischen der pulver- oder granulatförmigen Kammpolyester mit den weiteren Inhaltsstoffen der Geschirrspülmittelformulierung in den entsprechenden Einsatzmengen.

Die erfindungsgemäßen festen Geschirrreinigungsmittel können auch als extrudierte Formkörper dargeboten werden. Dabei wird ein festes und im Wesentlichen rieselfähiges Gemisch aus den Inhaltsstoffen oder einem Teil der Inhaltsstoffe der Geschirrreinigungsformulierung unter Druck strangförmig verpresst und der Strang nach Austritt aus der Lochform mittels einer Schneidevorrichtung auf die vorbestimmbare Granulatdimension zugeschnitten.

Eine bevorzugte erfindungsgemäße Ausführungsform sind Geschirrreinigungsmittel in Tablettenform, die einphasig oder mehrphasig, einfarbig oder mehrfarbig und insbesondere aus einer Schicht oder aus mehreren, insbesondere aus zwei Schichten bestehen können.

Die erfindungsgemäßen festen Geschirreinigungsmittel enthalten die üblichen Bestandteile, ausgewählt im Wesentlichen aus Tensiden, bevorzugt nichtionischen Tensiden, Enzymen, Aminosäuren und -salze, Builder, Co-Builder, Bleichmittel, organischen Säuren, Hydrotropen, Farb- und Duftstoffe, weiteren spezifischen Hilfs- und Zusatzstoffen wie beispielsweise Antioxidantien, Zeolithe, Salze, Bleichaktivatoren, Bleichkatalysatoren, photoaktiven Metalloxiden, photoaktiven Nanopartikeln, Photoaktivatoren, enzymstabilisierenden Zusätzen, Fungiziden, Bakteriziden, Belagsinhibitoren, antistatischen Zusätzen, Schaumregulatoren, Farbübertragungsinhibitoren, Geruchsfängern, Polymeren, Pigmenten, Mittel zur pH-Kontrolle, Mittel zur UV-Absorption, optische Aufheller, Dispergier-, Komplexierungs-, Konservierungs- und Glaskorrosionsmittel.

In den Geschirreinigungsmitteln für die Maschine werden schaumarme Verbindungen bevorzugt. Dies sind vor allem nichtionische Tenside, vorzugsweise alkoxylierte, vorteilhafterweise ethoxylierte, insbesondere primäre Alkohole mit vorzugsweise 8 bis 22 C-Atomen und durchschnittlich 1 bis 25 Mol Ethylenoxid (EO) pro Mol Alkohol, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 10 bis 20 C-Atomen, z. B. aus Kokos-, Palm-, Talgfett- oder Oleylakohol, und durchschnittlich 2 bis 18 EO pro Mol Alkohol bevorzugt. Der Ethoxylierungsgrad stellt einen statistischen Mittelwert dar, der für ein spezielles Produkt eine ganze oder gebrochene Zahl sein kann. Die Alkoholethoxylate können eine eingeengte oder breite Homologenverteilung des Ethylenoxids aufweisen (narrow range ethoxylates oder broad range ethoxylates). Unter diese Produktklasse fallen die Genapol^{®} TM-Marken der Firma Clariant Produkte (Deutschland) GmbH.

Die erfindungsgemäßen Polyester können auch in separaten Klarspülformulierungen zum Einsatz kommen.
Eine besonders bevorzugte Ausführungsform sind feste Geschirrreinigerformulierungen mit integriertem Klarspüler, enthaltend neben den erfindungsgemäßen Kammpolyestern, 0 bis 50 Gew.-% Phosphate, bevorzugt Pentanatriumtriphosphat, 0 bis 5 Gew.-% Phosphonate, 0 bis 50 Gew.-% Natriumcitrat, 0 bis 10 Gew.-% Natriumpolycarboxylate, 0 bis 40 Gew.-% Soda, 0 bis 25 Gew.-% Natriumhydrogencarbonat, 0 bis 30 Gew.-% Natriumdisilikat, 5 bis 15 Gew.-% Bleichmittel, bevorzugt Natriumperborat, 1 bis 5 Gew.-% Bleichaktivator, bevorzugt TAED, 1 bis 5 Gew.-% Enzyme, bevorzugt Proteasen und Amylasen, 1 bis 10 Gew.-% nichtionische Tenside, bevorzugt Fettalkoholalkoxylate und Polyethylenglykol 0 bis 2 Gew.-% Paraffine, 0 bis 1 Gew.-% Silberschutz, Duft- und Farbstoffe.

### Beispiel 1: Kammpolyester 1

In einem 2-I Vierhalskolben mit KPG-Rührer, Innenthermometer, Gaseinleitungsrohr und Destillierbrücke wurden 175 g Ethandiol, 175 g 1,2-Propandiol, 120 g Tertraethylenglykolmonomethylether und 0,6 g Titantetraisopropylat vorgelegt, verrührt und anschließend 0,6 g Natriumcarbonat und 118,5 g 5-Sulfoisophthalsäuredimethylester-Na-Salz, 265,8 g Terephthalsäure, und 3,0 g Polyacrylsäure (2.500 g/mol) eingetragen. Danach wurde zweimal evakuiert und mit N₂ inertisiert. Unter Rühren wurde nun innerhalb von 30 min auf 170 °C erhitzt. Bei ca. 173 °C begann die Umesterung bzw. Destillation. Im Laufe von 2 h Stunden wurde die Innentemperatur auf 210 °C gesteigert. Danach wurde die Innentemperatur auf ca. 225 °C gesteigert und weitere 30 min kondensiert. Im Anschluss daran wurde innerhalb von 30 min der Druck auf ein Vakuum < 1 mbar reduziert und 3 h bei 230 °C kondensiert. Die zum Ende der Kondensationsphase erreichte Schmelzviskosität betrug 10.000 mPas bei 230 °C. Anschließend wurde mit N₂ belüftet und die Schmelze bei 200 °C ausgetragen. Die Schmelzviskosität der Polyesterschmelze betrug beim Austrag 25.000 mPas.

Analog der Reaktionsführung von Beispiel 1 wurden die folgenden Kammpolyester 2 bis 8 hergestellt.

### Beispiel 2: Kammpolyester 2

| Rohstoff | Masse (g) |
|---|---|
| Terephthalsäure | 265,8 |
| 5-Sulfoisophthalsäure-Na-Salz | 118,5 |
| Triethylenglykolmonomethylether | 150 |
| Polyacrylsäure | 3,0 g / 2.500 g/mol |
| Natriumcarbonat | 0,6 |
| Titantetraisopropylat | 0,6 |
| 1,2-Propandiol | 175 |
| Ethylenglykol | 175 |

Schmelzviskosität bei 230 °C: 12.000 mPas
Schmelzviskosität bei 200 °C: 30.000 mPas

### Beispiel 3: Kammpolyester 3

| Rohstoff | Masse (g) |
|---|---|
| Terephthalsäure | 132,9 |
| 5-Sulfoisophthalsäure-Na-Salz | 118,5 |
| Tetraethylenglykolmonomethylether | 120 |
| Polyacrylsäure-Maleinsäureanhydrid | 4,5 g / 3.000 g/mol |
| Natriumcarbonat | 1,0 |
| Titantetraisopropylat | 0,6 |
| Polyethylenglykol 1500 | 75 |
| Ethylenglykol | 250 |

Schmelzviskosität bei 230 °C: 8.000 mPas
Schmelzviskosität bei 200 °C: 20.000 mPas

### Beispiel 4: Kammpolyester 4

| Rohstoff | Masse (g) |
|---|---|
| Isophthalsäuredimethylester | 120 |
| Terephthalsäuredimethylester | 75 |
| 5-Sulfoisophthalsäuredimethylester-Na-Salz | 196 |
| Pentaethylenglykolmonomethylether | 140 |
| Polyacrylsäure | 3,0 g / 2.000 g/mol |
| Natriumcarbonat | 0,6 |
| Titantetraisopropylat | 0,6 |
| Polyethylenglykol 6000 | 100 |
| 1,2-Propandiol | 220 |

Schmelzviskosität bei 230 °C: 5.000 mPas
Schmelzviskosität bei 200 °C: 17.000 mPas

### Beispiel 5: Kammpolyester 5

| Rohstoff | Masse (g) |
|---|---|
| Terephthalsäuredimethylester | 200 |
| 5-Sulfoisophthalsäuredimethylester-Na-Salz | 196 |
| Triethylenglykolmonobutylether | 110 |
| Polyacrylsäure | 3,5 g / 2.000 g/mol |
| Natriumcarbonat | 0,6 |
| Titantetraisopropylat | 0,6 |
| 1,2-Propandiol | 400 |

Schmelzviskosität bei 230 °C: 19.000 mPas
Schmelzviskosität bei 200 °C: 50.000 mPas

### Beispiel 6: Kammpolyester 6

| Rohstoff | Masse (g) |
|---|---|
| Terephthalsäuredimethylester | 200 |
| 5-Sulfoisophthalsäuredimethylester-Na-Salz | 196 |
| Tristyrylphenol + 20 EO | 220 |
| Polyacrylsäure-Maeinsäureanhydrid | 4.5 g / 3.000 g/mol |
| Natriumcarbonat | 0,6 |
| Titantetraisopropylat | 0,6 |
| 1,2-Propandiol | 220 |
| Ethylenglykol | 150 |

Schmelzviskosität bei 230 °C: 10.000 mPas
Schmelzviskosität bei 200 °C: 35.000 mPas

### Beispiel 7: Kammpolyester 7

| Rohstoff | Masse (g) |
|---|---|
| Isophthalsäuredimethylester | 120 |
| Terephthalsäuredimethylester | 75 |
| 5-Sulfoisophthalsäuredimethylester-Na-Salz | 196 |
| Pentaethylenglykolmonomethylether | 140 |
| Polyacrylsäure-Co-Na-AMPS (Gewichtsverhältnis 1:5) | 7,0 g / 5.500 g/mol |
| Natriumcarbonat | 0,6 |
| Titantetraisopropylat | 0,6 |
| Polyethylenglykol 6000 | 100 |
| 1,2-Propandiol | 220 |

Schmelzviskosität bei 230 °C: 6.000 mPas
Schmelzviskosität bei 200 °C: 18.000 mPas

### Beispiel 8: Kammpolyester 8

| Rohstoff | Masse (g) |
|---|---|
| Terephthalsäuredimethylester | 200 |
| 5-Sulfoisophthalsäuredimethylester-Na-Salz | 196 |
| Triethylenglykolmonobutylether | 110 |
| Polyacrylsäure-Co-Methacrylsäuremethylester | 3,5 g / 2.000 g/mol |
| Natriumcarbonat | 0,6 |
| Titantetraisopropylat | 0,6 |
| 1,2-Propandiol | 400 |

Schmelzviskosität bei 230 °C: 18.000 mPas
Schmelzviskosität bei 200 °C: 48.000 mPas

Um den Unterschied von Kammpolymeren mit anionischen encap-Gruppen zu den analogen Kammpolymeren mit nichtionischen endcap-Gruppen bezüglich deren Schmelzviskositäten aufzuzeigen, wurden Vergleichsversuche mit möglichst analoger Struktur durchgeführt und deren Schmelzviskositäten bei 200 °C und 230 °C ermittelt.
Es ist hierbei anzumerken, dass Viskositäten oberhalb von 50.000 mPas im Produktionsmaßstab nur schwer bis gar nicht zu bewältigen sind.

### Vergleichsbeispiele: Kammpolyester mit sulfogruppenhaltigen Endgruppen

### Vergleichsbeispiel 1:

In einem 2-I Vierhalskolben mit KPG-Rührer, Innenthermometer, Gaseinleitungsrohr und Destillierbrücke wurden 175 g Ethandiol, 175 g 1,2-Propandiol, 100 g Isethionsäure-Na-Salz und 0,6 g Titantetraisopropylat vorgelegt, verrührt und anschließend 0,6 g Natriumcarbonat und 118,5 g 5-Sulfoisophthalsäure-dimethylester-Na-Salz, 265,8 g Terephthalsäure, und 3,0 g Polyacrylsäure (2.500 g/mol) eingetragen. Danach wurde zweimal evakuiert und mit N₂ inertisiert. Unter Rühren wurde nun innerhalb von 30 min auf 170 °C erhitzt. Bei ca. 173 °C begann die Umesterung bzw. Destillation. Im Laufe von 2 h Stunden wurde die Innentemperatur bei Normaldruck auf 210 °C gesteigert. Danach wurde die Innentemperatur auf ca. 225 °C gesteigert und weitere 30 min kondensiert. Im Anschluss daran wurde in 30 min der Druck auf < 1 mbar reduziert und 3 h bei 230 °C kondensiert. Die zum Ende der Kondensationsphase erreichte Schmelzviskosität betrug 50.000 mPas. Anschließend wurde mit N₂ belüftet und die Schmelze bei 200 °C ausgetragen. Die Schmelzviskosität der Polyesterschmelze betrug beim Austrag etwa 250.000 mPas.

### Vergleichsbeispiel 2:

In einem 2-I Vierhalskolben mit KPG-Rührer, Innenthermometer, Gaseinleitungsrohr und Destillierbrücke wurden 210 g Ethandiol, 50 g 1,2-Diethylenglykol, 75 g 3-Sulfobenzoesäure-Na-Salz und 0,6 g Titantetraisopropylat vorgelegt, verrührt und anschließend 0,6 g Natriumcarbonat und 118,5 g 5-Sulfolsophthalsäure-dimethylester-Na-Salz, 300 g Terephthalsäure, und 4 g Polyacrylsäure (2.500 g/mol) eingetragen. Danach wurde zweimal evakuiert und mit N₂ inertisiert. Unter Rühren wurde nun innerhalb von 30 min auf 170 °C erhitzt. Bei ca. 173 °C begann die Umesterung bzw. Destillation. Im Laufe von 2 h Stunden wurde die Innentemperatur bei Normaldruck auf 210 °C gesteigert. Danach wurde die Innentemperatur auf ca. 225 °C gesteigert und weitere 30 min kondensiert. Im Anschluss daran wurde in 30 min der Druck auf < 1 mbar reduziert und 3 h bei 230 °C kondensiert. Die zum Ende der Kondensationsphase theoretisch zu erwartende Kondensatmenge wurde nicht erreichte. Aufgrund der sehr hohen Schmelzviskosität (> 100.000 mPas) wurde der Versuch vorzeitig abgebrochen.

### Phosphathaltiges Maschinengeschirrspülmittelpulver:

| | |
|---|---|
| Natriumtripolyphosphat | 43,5 % |
| SKS-6 HD-D (Schichtsilikat) | 10,0 % |
| Soda schwer | 29,5 % |
| Kammpolyester 1 | 1,0 % |
| Percarbonat | 10,0 % |
| TAED (Peractive CB) | 2,0 % |
| Nichtionisches Tensid (Genapol EP 0244) | 1,5 % |
| Protease (Savinase 8.0 T (Novozymes)) | 1,5 % |
| Amylase (Termamyl 120 T (Novozymes)) | 1,0 % |

### Phosphatreduziertes Maschinengeschirrspülmittel (Tab, multifunktional)

| | |
|---|---|
| Natriumtripolyphosphat | 24,0 % |
| Soda | 33,0 % |
| Kammpolyester 4 | 1,0 % |
| Disilikat | 5,0 % |
| Natriumcitrat | 7,2 % |
| Percarbonat | 10,0 % |
| TAED | 2,0 % |
| Nichtionisches Tensid (Genapol EP 2584) | 1,5 % |
| Polyglykol | 8,5 % |
| Polycarboxylat | 5,0 % |
| Enzyme | 2,5 % |
| Parfüm | 0,3 % |

### Phosphatfreies Maschinengeschirrspülmittel (Tab, multifunktional)

| | |
|---|---|
| SKS-6 HD | 10,0 % |
| Soda schwer | 28,5 % |
| Natriumcitrat | 29,5 % |
| Kammpolyester 3 | 1,0 % |
| Percarbonat | 10,0 % |
| TAED | 3,0 % |
| Polycarboxylat | 5,5 % |
| Enzyme (Protease, Amylase) | 3,0 % |
| Genapol EP 2584 | 4,0 % |
| Polyglykol | 5,2 % |
| Parfüm | 0,3 % |

### Chlorhaltiges Maschinengeschirrspülmittel für USA:

| | |
|---|---|
| Natriumtripolyphosphat | 33,5 % |
| Soda | 26,5 % |
| Disilikat, amorph oder kristallin | 9,0 % |
| Natriumsulfat | 26,5 % |
| Kammpolyester (5) | 1,5 % |
| Nichtionisches Tensid (Genapol EP 0244) | 1,5 % |
| Natriumdichlorcyanurat | 1,5 % |

## Patentansprüche

1. Kammpolymer, bestehend aus einer Polymerhauptkette und mit dieser Polymerhauptkette über Estergruppen verknüpften Polyesterseitenketten, **dadurch gekennzeichnet,**
(i) **dass** die Polymerhauptkette eine Polycarbonsäure oder eine Copolymer-Polycarbonsäure (A) ist,
(ii) **dass** die Polyesterseitenketten die Bestandteile (B1) C₈-Dicarbonsäuren, die gegebenenfalls sulfoniert sind, (B2) Diole und/oder Polyolether mit 2 OH-Gruppen, sowie (C) nichtionische Endgruppen der Formel -O-(AO)ₓR, wobei A Ethylen, Propylen oder Butylen, x eine Zahl von 1 bis 100, und R ein Kohlenwasserstoffrest mit 1 bis 30 C-Atomen bedeuten, enthalten;
(iii) **dass** der Gesamtmassenprozentanteil der Polyesterseitenketten B1+B2+C 80 bis 99,9 %, bezogen auf die Gesamtmasse des Kammpolymers, ist;
(iv) **dass** die Polyesterseitenketten durch eine Veresterungsreaktion der Komponenten B1, B2 und C im Massenverhältnis B1+B2 /C von 2:1 bis 100:1 erhalten werden.

2. Kammpolymer nach Anspruch 1, **dadurch gekennzeichnet, dass** die Polycarbonsäure (A) eine Poly(meth)acrylsäure ist.

3. Kammpolymer nach Anspruch 1 oder 2, **dadurch gekennzeichnet, dass** die Komponente (B1) Terephthalsäure, Isophthalsäure, Cyclohexandicarbonsäure, eine Sulfoisophthalsäure oder eine Kombination davon ist.

4. Kammpolymer nach einem oder mehreren der Ansprüche 1 bis 3, **dadurch gekennzeichnet, dass** die Komponente (B2) Ethylenglykol, ein Propandiol, ein Butandiol, ein Polyethylenglykol, ein Polypropylenglykol oder eine Kombination davon ist.

5. Kammpolymer nach einem oder mehreren der Ansprüche 1 bis 4, **dadurch gekennzeichnet, dass** die Komponente (C) sich von einer Polyalkoxyverbindung der Formel HO-(AO)ₓR ableitet, wobei A Ethylen, Propylen oder Butylen, x eine Zahl von 2 bis 100 und R Methyl, Ethyl, Propyl, Butyl oder Tristyrylphenyl bedeutet.

6. Kammpolymer nach Anspruch 5, **dadurch gekennzeichnet, dass** die Polyalkoxyverbindung Triethylenglykolmonomethylether, Triethylenglykolmonobutylether, Tetraethylenglykolmonomethylether, Pentaethylenglykolmonomethylether,oder Tristyrylphenolpolyethoxylat mit 10 bis 30 EO-Einheiten ist.

7. Kammpolymer nach einem oder mehreren der Ansprüche 1 bis 6, **dadurch gekennzeichnet, dass** der Gesamtmassenprozentanteil der Polyesterseitenketten B1+B2+C 90 bis 99,8 %, bezogen auf die Gesamtmasse des Kammpolymers, ist.

8. Kammpolymer nach einem oder mehreren der Ansprüche 1 bis 7, **dadurch gekennzeichnet, dass** die Polyesterseitenketten durch eine Veresterungsreaktion der Komponenten B1, B2 und C im Massenverhältnis B1+B2 / C von 3 : 1 bis 40 : 1 erhalten werden.

9. Kammpolymer nach einem oder mehreren der Ansprüche 1 bis 8, **gekennzeichnet durch** eine Schmelzviskosität von maximal 50.000 mPa·s, gemessen mit einem Haake Rotationsviskosimeter RV2 bei einer Temperatur von 200 °C.

10. Verfahren zur Herstellung eines Kammpolymers nach einem oder mehreren der Ansprüche 1 bis 9, **dadurch gekennzeichnet, dass** man die Komponenten (A), (B1), (B2) und (C) in Gegenwart eines Veresterungskatalysators miteinander umsetzt.

11. Verwendung eines Kammpolymers nach einem oder mehreren der Ansprüche 1 bis 9 als Schmutzlösepolymer in Wasch- und Reinigungsmitteln.

12. Wasch- oder Reinigungsmittel, enthaltend ein Kammpolymer nach einem oder mehreren der Ansprüche 1 bis 9.

13. Wasch- oder Reinigungsmittel nach Anspruch 12, enthaltend zwischen 0,1 und 10 Gew.-% Kammpolymer, bezogen auf das fertige Mittel.

## Claims

1. Comb polymer composed of a main polymer chain and of polyester side chains linked via ester groups to said main polymer chain, **characterized**
(i) **in that** the main polymer chain is a polycarboxylic acid or a copolymer polycarboxylic acid (A),
(ii) **in that** the polyester side chains comprise the constituents (B1) C₈ dicarboxylic acids, which are optionally sulfonated, (B2) diols and/or polyol ethers having 2 OH groups, and (C) nonionic end groups of the formula -O-(AO)ₓR, where A is ethylene, propylene or butylene, x is a number from 1 to 100, and R is a hydrocarbon radical having 1 to 30 carbon atoms;
(iii) **in that** the total mass percentage of the polyester side chains B1+B2+C is 80% to 99.9%, based on the total mass of the comb polymer;
(iv) **in that** the polyester side chains are obtained by an esterification reaction of components B1, B2, and C in a B1+B2/C mass ratio of 2:1 to 100:1.

2. Comb polymer according to Claim 1, **characterized in that** the polycarboxylic acid (A) is a poly(meth)acrylic acid.

3. Comb polymer according to Claim 1 or 2, **characterized in that** component (B1) is terephthalic acid, isophthalic acid, cyclohexanedicarboxylic acid, a sulfoisophthalic acid or a combination thereof.

4. Comb polymer according to one or more of Claims 1 to 3, **characterized in that** component (B2) is ethylene glycol, a propanediol, a butanediol, a polyethylene glycol, a polypropylene glycol or a combination thereof.

5. Comb polymer according to one or more of Claims 1 to 4, **characterized in that** component (C) derives from a polyalkoxy compound of the formula HO-(AO)ₓR, where A is ethylene, propylene or butylene, x is a number from 2 to 100, and R is methyl, ethyl, propyl, butyl or tristyrylphenyl.

6. Comb polymer according to Claim 5, **characterized in that** the polyalkoxy compound is triethylene glycol monomethyl ether, triethylene glycol monobutyl ether, tetraethylene glycol monomethyl ether, pentaethylene glycol monomethyl ether, or tristyrylphenol polyethoxylate having 10 to 30 EO units.

7. Comb polymer according to one or more of Claims 1 to 6, **characterized in that** the total mass percentage of the polyester side chains B1+B2+C is 90% to 99.8%, based on the total mass of the comb polymer.

8. Comb polymer according to one or more of Claims 1 to 7, **characterized in that** the polyester side chains are obtained by an esterification reaction of components B1, B2 and C in a B1+B2/C mass ratio of 3:1 to 40:1.

9. Comb polymer according to one or more of Claims 1 to 8, **characterized by** a melt viscosity of not more than 50 000 mPas, measured using a Haake RV2 rotary viscometer at a temperature of 200°C.

10. Process for preparing a comb polymer according to one or more of Claims 1 to 9, **characterized in that** components (A), (B1), (B2), and (C) are reacted with one another in the presence of an esterification catalyst.

11. Use of a comb polymer according to one or more of Claims 1 to 9 as a soil release polymer in detergent compositions.

12. Detergent composition comprising a comb polymer according to one or more of Claims 1 to 9.

13. Detergent composition according to Claim 12, containing between 0.1% and 10% by weight of comb polymer, based on the completed composition.

## Revendications

1. Polymère en peigne, constitué par une chaîne principale de polymère et des chaînes latérales de polyester liées à cette chaîne principale de polymère via des groupes ester, **caractérisé**
(i) **en ce que** la chaîne principale de polymère est un poly(acide carboxylique) ou un poly(acide carboxylique) copolymère (A),
(ii) **en ce que** les chaînes latérales de polyester contiennent les constituants (B1) acides C₈-dicarboxyliques qui sont le cas échéant sulfonés, (B2) diols et/ou polyoléthers comprenant deux groupes OH, ainsi que (C) groupes terminaux non ioniques de formule -O-(AO)ₓR, A signifiant éthylène, propylène ou butylène, x valant un nombre de 1 à 100, et R représentant un radical hydrocarboné comprenant 1 à 30 atomes de carbone ;
(iii) **en ce que** la proportion totale en pourcentage en masse des chaînes latérales de polyester B1 + B2 + C vaut 80 à 99,9%, par rapport à la masse totale du polymère en peigne ;
(iv) **en ce que** les chaînes latérales de polyester sont obtenues par une réaction d'estérification des composants B1, B2 et C dans un rapport massique B1+B2/C de 2:1 à 100:1.

2. Polymère en peigne selon la revendication 1, **caractérisé en ce que** le poly(acide carboxylique) (A) est un poly(acide (méth)acrylique).

3. Polymère en peigne selon la revendication 1 ou 2, **caractérisé en ce que** le composant (B1) est l'acide téréphtalique, l'acide isophtalique, l'acide cyclohexanedicarboxylique, un acide sulfo-isophtalique ou une combinaison de ceux-ci.

4. Polymère en peigne selon l'une ou plusieurs des revendications 1 à 3, **caractérisé en ce que** le composant (B2) est l'éthylèneglycol, un propanediol, un butanediol, un polyéthylèneglycol, un polypropylèneglycol ou une combinaison de ceux-ci.

5. Polymère en peigne selon l'une ou plusieurs des revendications 1 à 4, **caractérisé en ce que** le composant (C) est dérivé d'un composé polyalcoxy de formule HO-(AO)ₓR, A signifiant éthylène, propylène ou butylène, x valant un nombre de 2 à 100 et R signifiant méthyle, éthyle, propyle, butyle ou tristyrylphényle.

6. Polymère en peigne selon la revendication 5, **caractérisé en ce que** le composé polyalcoxy est le triéthylèneglycolmonométhyléther, le triéthylèneglycolmonobutyléther, le tétraéthylèneglycolmonométhyléther, le pentaéthylèneglycolmonométhyléther ou le polyéthoxylate de tristyrylphénol comprenant 10 à 30 unités d'OE.

7. Polymère en peigne selon l'une ou plusieurs des revendications 1 à 6, **caractérisé en ce que** la proportion totale en pourcentage en masse des chaînes latérales de polyester B1 + B2 + C vaut 90 à 99,8%, par rapport à la masse totale du polymère en peigne.

8. Polymère en peigne selon l'une ou plusieurs des revendications 1 à 7, **caractérisé en ce que** les chaînes latérales de polyester sont obtenues par une réaction d'estérification des composants B1, B2 et C dans un rapport massique B1+B2/C de 3:1 à 40:1.

9. Polymère en peigne selon l'une ou plusieurs des revendications 1 à 8, **caractérisé par** une viscosité en masse fondue d'au maximum 50 000 mPa.s, mesurée au moyen d'un viscosimètre rotatif de Haake RV2 à une température de 200°C.

10. Procédé pour la préparation d'un polymère en peigne selon l'une ou plusieurs des revendications 1 à 9, **caractérisé en ce qu'**on fait réagir les composants (A), (B1), (B2) et (C) les uns avec les autres en présence d'un catalyseur d'estérification.

11. Utilisation d'un polymère en peigne selon l'une ou plusieurs des revendications 1 à 9 comme polymère de dissolution de souillures dans les agents de lavage et de nettoyage.

12. Agent de lavage ou de nettoyage contenant un polymère en peigne selon l'une ou plusieurs des revendications 1 à 9.

13. Agent de lavage ou de nettoyage selon la revendication 12, contenant entre 0,1 et 10% en poids de polymère en peigne, par rapport à l'agent fini.
